# EUROPÄISCHE PATENTSCHRIFT

(11) **EP 3 423 317 B1**
(45) Veröffentlichungstag und Bekanntmachung des Hinweises auf die Patenterteilung: **19.08.2020**
(21) Anmeldenummer: 17707507.4
(22) Anmeldetag: 23.02.2017
(51) Int. Cl.: B60T 17/00

(54) **LUFTTROCKNERPATRONE UND SCHRAUBENFEDER FÜR LUFTTROCKNERPATRONE**
AIR DRYER CARTRIDGE AND COIL SPRING FOR AIR DRYER CARTRIDGE
CARTOUCHE DE DESSICATEUR D'AIR ET RESSORT HÉLICOÏDAL POUR UNE CARTOUCHE DE DESSICATEUR D'AIR

(30) Priorität: 01.03.2016 DE 102016002385
(43) Veröffentlichungstag der Anmeldung: 09.01.2019
(73) Patentinhaber: KNORR-BREMSE Systeme für Nutzfahrzeuge GmbH, 80809 München (DE)
(72) Erfinder: OCHSENKÜHN, Andreas, 80339 München (DE)
(86) Internationale Anmeldenummer: PCT/EP2017/054115
(87) Internationale Veröffentlichungsnummer: WO 2017/148778

(56) Entgegenhaltungen:
- EP-A2- 1 813 491
- WO-A1-95/14598
- US-A1- 2004 094 036
- US-A1- 2009 038 327

## Beschreibung

Die vorliegende Erfindung betrifft eine Lufttrocknerpatrone und eine Schraubenfeder für eine Lufttrocknerpatrone, insbesondere für eine Druckluftaufbereitungsanlage von Nutzfahrzeugen.

Derartige Lufttrocknerpatronen kommen beispielsweise in Nutzfahrzeugen wie Lastkraftwagen und Traktoren zum Einsatz. Diese verfügen in der Regel über einen oder mehrere Druckluftverbraucher, wie beispielsweise ein Luftdruckbremssystem für Zugfahrzeug und Anhänger oder Luftfederungen. Diese Komponenten müssen mit Druckluft versorgt werden. Die Druckluft wird typischerweise von einem Kompressor, zum Beispiel einem von einem Antriebsmotor des Fahrzeugs angetriebenen Hubkolbenkompressor, zur Verfügung gestellt. Um einen störungsfreien Betrieb der Druckluftverbraucher zu gewährleisten, muss die vom Kompressor bereitgestellte Druckluft üblicherweise weiter aufbereitet werden. In den dafür vorgesehenen Druckluftaufbereitungsanlagen wird die Druckluft von Schmutzpartikeln, die bereits in der angesaugten Luft enthalten waren, sowie von Öl- und Rußpartikeln, die während des Verdichtungsprozesses vom Kompressor in die Druckluft eingetragen werden, gereinigt. Des Weiteren wird die in der Druckluft vorhandene Feuchtigkeit abgeschieden. Dies ist notwendig, um ein Auskondensieren der in der Druckluft enthaltenen Feuchtigkeit in einem Druckluftbehälter zu vermeiden bzw. um eine darin entstehende Kondensatmenge zu minimieren. Zu diesem Zweck verfügen die Druckluftaufbereitungsanlagen von Nutzfahrzeugen in der Regel über Lufttrocknerpatronen, welche die Druckluft entfeuchten und vorzugsweise auch Öl- und Schmutzpartikel aufnehmen.

Eine solche Lufttrocknerpatrone, wie sie beispielsweise aus der EP 0 036 569 B1 bekannt ist, verfügt über eine Trocknungseinheit, die eine Schüttung aus Trockenmittel / Trockenmittelgranulat enthält. Diese aus Trockenmittel bestehende Schüttung ist in einem Trockenmittelbehälter untergebracht, der in einem Patronengehäuse aufgenommen ist. Das zum Beispiel hutartige Patronengehäuse weist einen Flansch zum Befestigen der Lufttrocknerpatrone auf einem Lufttrockner auf.

Die Schüttung des Trockenmittels muss dabei unter Vorspannung gehalten werden, damit ein definierter Luftdurchtrittsquerschnitt gegeben ist. Andernfalls würden die einzelnen Körner der Schüttung, falls die Schüttung lose im Trockenmittelbehälter vorliegen würde, aufgrund der im Fahrbetrieb auftretenden Vibrationen aneinander reiben und dadurch zu Pulver werden. Dieses Pulver ist unter Umständen so fein, dass es die Druckluftbremsanlage eines Fahrzeugs an neuralgischen Punkten außer Funktion setzen könnte. Um das Trockenmittel unter Vorspannung zu halten, ist der Trockenmittelbehälter aus zwei Gehäuseteilen aufgebaut, die zueinander bewegbar sind. Zwischen einem der beiden Gehäuseteile und dem Patronengehäuse wird eine Feder angeordnet, die das Gehäuseteil in eine Richtung zum Reduzieren des Volumens des Trockenmittelbehälters vorspannt.

Herkömmlicherweise werden hierfür Schraubenfedern mit einer zylindrischen Gestalt verwendet. Dabei muss die verwendete Feder im Hinblick auf ihre Größe relativ hohe Federkräfte ausüben (z.B. etwa 500 N), wodurch eine starke und daher teure Feder benötigt wird. Wie bereits erwähnt, stützt sich die eingebaute Feder an dem Patronengehäuse, genauer an einem in der Regel konkav gewölbten Teil des Patronengehäuses ab. Dabei entsteht das Problem, dass das mit dem gewölbten Teil des Patronengehäuses in Kontakt stehende Federende eine scharfe Kante aufweist und sich deshalb in das Patronengehäuse drücken kann, falls dieses nicht stabil genug ausgeführt ist. Das Patronengehäuse kann sich dadurch unter Umständen kaltverformen und brüchig werden.

Zur Lösung dieses Problems ist es bekannt, die scharfe Kante am Ende der Feder abzuschleifen, um eine größere Kontaktfläche des Federendes mit dem Patronengehäuse zu erreichen und so die Krafteinleitung zu verbessern. Hierbei muss der geschliffene Bereich der Feder allerdings zwecks Korrosionsschutz nachbearbeitet werden, was aufwändig und teuer ist. Als weitere Lösung des obigen Problems ist es bekannt, das freie Federende auf der Seite des gewölbten Patronengehäuses in das radiale Zentrum der Schraubenfeder hin, also radial nach innen zu biegen. In der Serienfertigung von Federn ist es allerdings kostengünstig nur möglich, eines der Federenden radial nach innen zu biegen, nicht aber beide. Zum Biegen auch des zweiten Federendes nach innen muss die Feder während der Produktion umgespannt werden, wodurch ein höherer Produktionsaufwand entsteht und die Kosten für die Feder steigen. Falls Federn verwendet werden, die nur ein einziges radial nach innen gebogenes Ende aufweisen, muss beim Zusammenbau der Lufttrocknerpatronen auf die Orientierung der Feder geachtet werden, was einen erhöhten Montageaufwand erfordert.

Das Dokument US 2004/094036 A1 offenbart eine Lufttrocknerpatrone der bereits zuvor beschriebenen Art, welche eine Schraubenfeder aufweist, bei der die äußere Windung an einem Ende der Schraubenfeder einen größeren Durchmesser aufweist als zwischen den beiden Enden der Schraubenfeder liegende innere Windungen, sodass die äußere Windung, d.h. das außenliegende freie Ende der Schraubenfeder sich der Formgebung z.B. des Patronengehäuses frei anpassen kann, ohne von einer ihr benachbarten Windung der Schraubenfeder daran gehindert zu werden. Durch diese Konfiguration kann verhindert werden, dass sich die Kante am Ende dieser äußeren Windung der Schraubenfeder, genauer die Kante zwischen Mantelfläche und Stirnfläche der Schraubenfeder, in z.B. das Patronengehäuse eindrückt. Eine aufwändige Fertigung der Schraubenfeder inklusive Abschleifen, umspannen und Nachbearbeitung zum Korrosionsschutz kann somit verhindert werden.

Allerdings ergibt sich das Problem, dass sich derartige Schraubenfedern bei der Fertigung, dem Transport oder der Lagerung leicht ineinander verhaken und somit erhöhter Zeit- und Arbeitsaufwand nötig ist, um die jeweiligen Federn wieder voneinander zu trennen.

Es ist eine Aufgabe der vorliegenden Erfindung, eine verbesserte Lufttrocknerpatrone vorzusehen, welche die obigen Probleme löst und trotzdem kostengünstig herstellbar ist.

Diese Aufgabe wird gelöst durch eine Lufttrocknerpatrone mit den Merkmalen des Anspruchs 1. Vorteilhafte Weiterbildungen sind Gegenstand der Unteransprüche.

Die Lufttrocknerpatrone der Erfindung weist einen Trockenmittelbehälter zum Bevorraten eines Trockenmittels mit einem ersten Gehäuseteil und einem zweiten

Gehäuseteil, die relativ zueinander bewegbar sind, und ein Patronengehäuse zum Aufnehmen des Trockenmittelbehälters auf. Eine Schraubenfeder spannt das zweite Gehäuseteil in eine Richtung zum Reduzieren eines Volumens des Trockenmittelbehälters vor. Die Schraubenfeder weist mehrere Windungen auf, wobei eine erste äußere Windung an einem ersten Ende der Schraubenfeder einen größeren Durchmesser aufweist als zwischen dem ersten und dem zweiten Ende der Schraubenfeder liegende innere Windungen der Schraubenfeder. Vorzugsweise weist eine zweite äußere Windung am zweiten Ende der Schraubenfeder ebenfalls einen größeren Durchmesser auf als zwischen dem ersten und dem zweiten Ende der Schraubenfeder liegende innere Windungen der Schraubenfeder.

Die Lufttrocknerpatrone weist ein Patronengehäuse auf, in dem ein Trockenmittelbehälter zum Bevorraten eines Trockenmittels angeordnet ist. Das Trockenmittel ist vorzugsweise ein Trockenmittelgranulat, das lose in dem Trockenmittelbehälter vorliegt. Der Trockenmittelbehälter weist ein erstes Gehäuseteil, das zum Beispiel im Wesentlichen zylindrisch ausgestaltet ist, und ein zweites Gehäuseteil, das zum Beispiel als eine Trockenmittelabdeckung bzw. ein Granulatdeckel ausgestaltet ist, die/der in eine Öffnung des ersten Gehäuseteils bewegbar eingesetzt ist, auf. Vorzugsweise wird die Trockenmittelabdeckung in dem ersten Gehäuseteil des Trockenmittelbehälters axial geführt. Durch das Ausüben einer Kraft mittels einer Schraubenfeder auf das zweite Gehäuseteil wird das in dem Trockenmittelbehälter befindliche Trockenmittel(granulat) unter einer definierten Vorspannung gehalten, sodass im Trockenmittelbehälter ein definierter Luftdurchtrittsquerschnitt gewährleistet werden kann. Hierbei stützt sich die Schraubenfeder im verbauten Zustand einerseits am zweiten Gehäuseteil des Trockenmittelbehälters und andererseits zum Beispiel an dem Patronengehäuse oder einem zusätzlichen Deckel zwischen Patronengehäuse und Trockenmittelbehälter derart ab, dass sie im verbauten Zustand gestaucht ist.

Gemäß der Erfindung wird vorgeschlagen, die Schraubenfeder so auszugestalten, dass eine erste äußere Windung an einem ersten Ende der Schraubenfeder und/oder eine zweite äußere Windung an einem zweiten Ende der Schraubenfeder jeweils einen größeren Durchmesser aufweisen als zwischen dem ersten und dem zweiten Ende der Schraubenfeder liegende innere Windungen der Schraubenfeder. D.h. vorzugsweise weist die Schraubenfeder an ihrem einen Ende eine erste äußere Windung mit einem größeren Durchmesser auf als die Windung, welche dieser Windung benachbart ist, und/oder weist an ihrem anderen Ende eine zweite äußere Windung mit einem größeren Durchmesser auf als der Durchmesser der ihr benachbarten Windung. Diese Konfiguration kann als "Schraubenfeder mit außenliegenden Enden" bezeichnet werden. Gemäß der Erfindung müssen aber nicht notwendigerweise alle inneren Windungen der Schraubenfeder einen kleineren Durchmesser als die erste äußere Windung bzw. die zweite äußere Windung haben. Der Begriff Durchmesser bezieht sich hier wahlweise auf den Außendurchmesser oder den Innendurchmesser der Windungen der Schraubenfeder; der Drahtdurchmesser der Schraubenfeder ist über alle Windungen hinweg im Wesentlichen konstant.

Durch diese Ausgestaltung der Schraubenfeder mit außenliegenden Enden ist es möglich, dass die Schraubenfeder im verbauten Zustand über eine möglichst große Windungslänge an z.B. dem Patronengehäuse anliegt, sodass eine verbesserte Kräfteverteilung erzielt werden kann. Diese Kräfteverteilung ist bei einer Abstützung der Schraubenfeder gegen eine weg von dem Trockenmittelbehälter (d.h. konkav nach außen) gewölbte Fläche noch besser. Die äußere Windung, d.h. das außenliegende freie Ende der Schraubenfeder kann sich der Formgebung z.B. des Patronengehäuses frei anpassen, ohne von einer ihr benachbarten Windung der Schraubenfeder daran gehindert zu werden. Durch diese Konfiguration kann verhindert werden, dass sich die Kante am Ende dieser äußeren Windung der Schraubenfeder, genauer die Kante zwischen Mantelfläche und Stirnfläche der Schraubenfeder, in z.B. das Patronengehäuse eindrückt. Als Ergebnis wird z.B. das Patronengehäuse weniger stark belastet und kann mit einer geringeren Materialstärke ausgeführt werden, wodurch Gewicht und Kosten eingespart werden können.

Weiterhin ist im unverbauten Zustand der Schraubenfeder ein Innendurchmesser der ersten äußeren Windung an deren äußerem Ende um weniger als eine Drahtdurchmessergröße der Schraubenfeder größer als ein Außendurchmesser der der ersten äußeren Windung benachbarten inneren Windung bzw. ist ein Innendurchmesser der zweiten äußeren Windung an deren äußerem Ende um weniger als eine Drahtdurchmessergröße der Schraubenfeder größer als ein Außendurchmesser der der zweiten äußeren Windung benachbarten inneren Windung. Vorzugsweise beträgt dieser radiale Abstand maximal etwa 75% des Drahtdurchmessers, bevorzugter maximal etwa 50% des Drahtdurchmessers. Diese Begrenzung des radialen Abstands soll gemäß der Erfindung zumindest am äußeren Ende der ersten bzw. der zweiten Windung der Schraubenfeder gelten, d.h. nicht notwendigerweise über die gesamte äußere Windung hinweg. Durch diese Maßnahme kann gewährleistet werden, dass sich baugleiche erfindungsgemäße Schraubenfedern beim Fertigungsprozess und beim Transport bzw. Lagerung nicht ineinander verhaken oder einfädeln, was zu Verzögerungen beim Montageprozess der Lufttrocknerpatrone führen würde. Andererseits beträgt dieser radiale Abstand vorzugsweise mindestens etwa 15% des Drahtdurchmessers oder mindestens etwa 0,5 mm, um ein Berühren der einander benachbarten Windungen der Schraubenfeder zu vermeiden. Durch diese Maßnahme kann eine Beschädigung der Oberflächenbeschichtung verhindert werden.

Ein weiterer Vorteil für die erfindungsgemäße Lufttrocknerpatrone ergibt sich daraus, dass die mittleren Windungen der Feder einen geringeren Durchmesser als die äußeren Windungen aufweisen. Hierdurch ist die Schraubenfeder mit einer geringeren Drahtstärke ausführbar, wodurch Material und somit Herstellungskosten eingespart werden können.

Zudem ist die Erfindung derart ausgestaltet, dass sich die Schraubenfeder über wenigstens 1,2 Windungen, bevorzugter wenigstens 1,4 Windungen, noch bevorzugter wenigstens 1,5 Windungen hinweg abstützt. D.h. es liegt nicht nur das äußere Ende der äußeren Windung der Schraubenfeder an z.B. dem Patronengehäuse an, sondern neben der gesamten ersten äußeren Windung auch noch ein Teil der darauf folgenden inneren Windung. Hierdurch kann die Krafteinleitung von der Schraubenfeder in z.B. das Patronengehäuse weiter verbessert werden.

In einer vorteilhaften Ausgestaltung der Erfindung weisen die erste äußere Windung und die zweite äußere Windung der Schraubenfeder eine zueinander identische Geometrie auf. Auf diese Weise ist die Schraubenfeder symmetrisch ausgestaltet. Durch diese Maßnahme ist es beim Zusammenbau der Lufttrocknerpatrone irrelevant, in welcher Orientierung die Schraubenfeder verbaut wird. Im Ergebnis wird die Montage vereinfacht und kostengünstiger ausführbar, wobei gleichzeitig Montagefehler vermieden werden können.

In einer vorteilhaften Ausgestaltung der Erfindung stützt sich die Schraubenfeder gegen eine in eine Richtung weg von dem Trockenmittelbehälter gewölbte Fläche ab. Vorteilhafterweise kann die Kräfteverteilung dadurch noch weiter verbessert werden, dass die freien Enden der Schraubenfeder mit einem noch größeren Durchmesser ausgeführt werden, je stärker z.B. das Patronengehäuse gewölbt ist.

In einer weiteren vorteilhaften Ausgestaltung der Erfindung ist die erste äußere Windung der Schraubenfeder im verbauten Zustand der Schraubenfeder von einer ihr benachbarten inneren Windung der Schraubenfeder beabstandet (d.h. liegt nicht auf dieser auf und berührt diese vorzugsweise nicht). Alternativ oder zusätzlich ist auch die zweite äußere Windung der Schraubenfeder im verbauten Zustand der Schraubenfeder vorzugsweise von einer ihr benachbarten inneren Windung der Schraubenfeder beabstandet (d.h. liegt nicht auf dieser auf und berührt diese vorzugsweise nicht).

Alternativ oder zusätzlich ist auch die zweite äußere Windung der Schraubenfeder im verbauten Zustand der Schraubenfeder vorzugsweise von einer ihr benachbarten inneren Windung der Schraubenfeder beabstandet (d.h. liegt nicht auf dieser auf und berührt diese vorzugsweise nicht). Vorzugsweise ist im unverbauten Zustand der Schraubenfeder ein Innendurchmesser der ersten äußeren Windung an deren äußerem Ende um weniger als eine Drahtdurchmessergröße der Schraubenfeder größer als ein Außendurchmesser der der ersten äußeren Windung benachbarten inneren Windung bzw. ist ein Innendurchmesser der zweiten äußeren Windung an deren äußerem Ende um weniger als eine Drahtdurchmessergröße der Schraubenfeder größer als ein Außendurchmesser der der zweiten äußeren Windung benachbarten inneren Windung. Vorzugsweise beträgt dieser radiale Abstand maximal etwa 75% des Drahtdurchmessers, bevorzugter maximal etwa 50% des Drahtdurchmessers. Diese Begrenzung des radialen Abstands soll gemäß der Erfindung zumindest am äußeren Ende der ersten bzw. der zweiten Windung der Schraubenfeder gelten, d.h. nicht notwendigerweise über die gesamte äußere Windung hinweg. Durch diese Maßnahme kann gewährleistet werden, dass sich Schraubenfedern beim Fertigungsprozess nicht ineinander verhaken oder einfädeln, was zu Verzögerungen beim Montageprozess der Lufttrocknerpatrone führen würde. Andererseits beträgt dieser radiale Abstand vorzugsweise mindestens etwa 15% des Drahtdurchmessers oder mindestens etwa 0,5 mm, um ein Berühren der einander benachbarten Windungen der Schraubenfeder zu vermeiden. Durch diese Maßnahme kann eine Beschädigung der Oberflächenbeschichtung verhindert werden.

In einer weiteren vorteilhaften Ausgestaltung der Erfindung stützt sich die Schraubenfeder über wenigstens 1,2 Windungen, bevorzugter wenigstens 1,4 Windungen, noch bevorzugter wenigstens 1,5 Windungen hinweg ab. D.h. vorzugsweise liegt nicht nur das äußere Ende der äußeren Windung der Schraubenfeder an z.B. dem Patronengehäuse an, sondern neben der gesamten ersten äußeren Windung auch noch ein Teil der darauf folgenden inneren Windung. Hierdurch kann die Krafteinleitung von der Schraubenfeder in z.B. das Patronengehäuse weiter verbessert werden.

In einer vorteilhaften Ausgestaltung der Erfindung bildet wenigstens ein Teil der inneren Windungen der Schraubenfeder einen zylindrischen Abschnitt der Schraubenfeder. Eine derart ausgestaltete Schraubenfeder besitzt vorteilhafterweise eine geringere Knickneigung als zum Beispiel eine reine Doppelkegelfeder.

In einer weiteren vorteilhaften Ausgestaltung der Erfindung ist am zweiten Gehäuseteil des Trockenmittelbehälters wenigstens ein Führungselement zum Positionieren der Schraubenfeder vorgesehen. Dieses wenigstens eine Führungselement weist vorzugsweise ein inneres Führungselement auf, das im verbauten Zustand der Schraubenfeder bis in wenigstens eine innere Windung der Schraubenfeder in die Schraubenfeder hinein ragt. Durch das wenigstens eine Führungselement kann die Positionierung der Schraubenfeder beim Zusammenbau der Lufttrocknerpatrone vereinfacht werden und kann ein Beibehalten der korrekten Position der Schraubenfeder im verbauten Zustand unterstützt werden. Das innere Führungselement ist insbesondere in Kombination mit einem mittleren zylindrischen Abschnitt der Schraubenfeder von Vorteil, der auf dem inneren Führungselement zum Beispiel zentrierbar ist. Das innere Führungselement ragt dann im verbauten Zustand der Schraubenfeder bevorzugt wenigstens über eine innere Windung des zylindrischen Abschnitts der Schraubenfeder in diese hinein. Vorzugsweise ragt das innere Führungselement im verbauten Zustand der Schraubenfeder wenigstens ein Viertel, bevorzugter wenigstens ein Drittel der Höhe der Schraubenfeder in die Schraubenfeder hinein. Außerdem ist das Vorsehen der Führungselemente am zweiten Gehäuseteil des Trockenmittelbehälters von Vorteil, da diese Ausgestaltung kostengünstiger auszuführen ist als alternativ dazu eine Anbringung von Führungselementen an einer Innenseite z.B. des Patronengehäuses.

In einer noch weiteren vorteilhaften Ausgestaltung der Erfindung weist ein Draht der Schraubenfeder über seine gesamte Länge einen im Wesentlichen kreisförmigen Querschnitt auf. Mit anderen Worten kann auf ein Anschleifen der Federenden wie beim Einsatz herkömmlicher Schraubenfedern verzichtet werden, da die erfindungsgemäß ausgestaltete Schraubenfeder bereits ohne Anschleifen eine maximale Auflagefläche der äußeren Windung an z.B. dem Patronengehäuse erreicht. So kann der Fertigungsaufwand gering gehalten werden und kann auf eine abschließende Beschichtung der Federenden zum Zwecke des Korrosionsschutzes verzichtet werden. Gemäß der Erfindung kann bevorzugt ein beschichteter Draht zur Schraubenfeder gewunden werden, ohne dass dessen Federenden angeschliffen werden müssten und ohne dass eine nachträgliche Beschichtung erforderlich wäre. Zum Zwecke des Korrosionsschutzes wird für die Schraubenfeder vorzugsweise ein beschichteter Draht verwendet, in anderen Ausführungsformen ist auch die Verwendung unbeschichteter Drähte für die Herstellung der Schraubenfeder denkbar.

In einer vorteilhaften Ausführungsform der Erfindung ist der Trockenmittelbehälter direkt von dem Patronengehäuse umgeben und stützt sich die Schraubenfeder einerseits an dem zweiten Gehäuseteil des Trockenmittelbehälters und andererseits an dem Patronengehäuse ab. Vorzugsweise stützt sich die Schraubenfeder an einem nach außen gewölbten Deckelabschnitt des Patronengehäuses ab.

In einer anderen vorteilhaften Ausführungsform der Erfindung ist zwischen dem Trockenmittelbehälter und dem Patronengehäuse ein Deckel angeordnet, der relativ zum ersten Gehäuseteil des Trockenmittelbehälters unbeweglich befestigt ist. Die Schraubenfeder stützt sich dann vorzugsweise einerseits an dem zweiten Gehäuseteil des Trockenmittelbehälters und andererseits an diesem Deckel ab. Bei dieser Ausführungsform muss nicht die gesamte Lufttrocknerpatrone ausgetauscht werden, sondern nur die innere Einheit ohne das Patronengehäuse. Der Deckel ist vorzugsweise über eine Schnappverbindung an dem ersten Gehäuseteil des Trockenmittelbehälters angebracht.

Gegenstand der Erfindung ist auch eine Schraubenfeder für eine oben beschriebene Lufttrocknerpatrone der Erfindung.

Die Erfindung ist besonders vorteilhaft bei Lufttrocknerpatronen für Druckluftaufbereitungsanlagen von Nutzfahrzeugen anwendbar.

Obige sowie weitere Vorteile, Merkmale und Anwendungsmöglichkeiten der Erfindung werden aus der nachfolgenden Beschreibung eines Ausführungsbeispiels anhand der beiliegenden Zeichnungen besser verständlich. Darin zeigen, größtenteils schematisch:
- Fig. 1: eine Schnittansicht einer herkömmlichen Lufttrocknerpatrone;
- Fig. 2: eine vergrößerte Detailansicht der Lufttrocknerpatrone von Fig. 1;
- Fig. 3: eine Schnittansicht einer Lufttrocknerpatrone gemäß einem ersten Ausführungsbeispiel der Erfindung;
- Fig. 4: eine vergrößerte Detailansicht der Lufttrocknerpatrone von Fig. 3;
- Fig. 5: eine Schnittansicht einer Lufttrocknerpatrone gemäß einem zweiten Ausführungsbeispiel der Erfindung; und
- Fig. 6: eine vergrößerte Detailansicht der Lufttrocknerpatrone von Fig. 5.

Zum besseren Verständnis der vorliegenden Erfindung wird zunächst der Aufbau einer herkömmlichen Lufttrocknerpatrone beispielhaft erläutert.

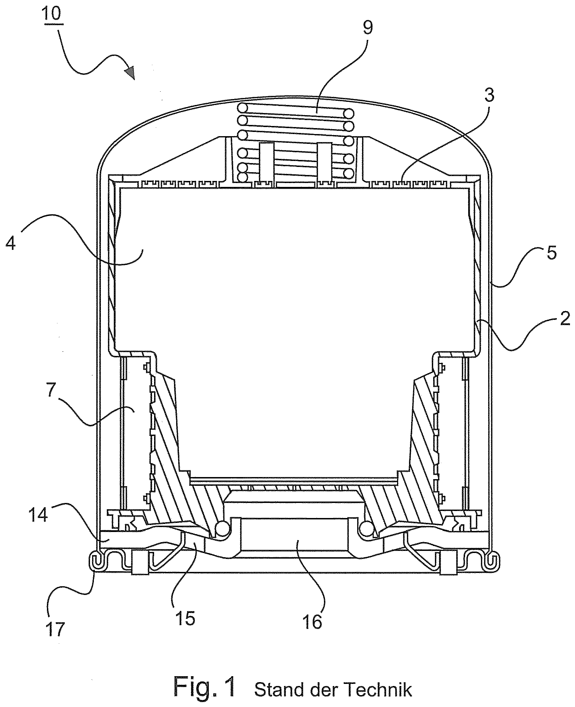

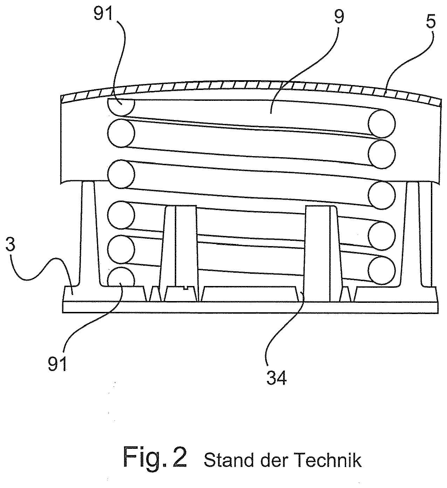

**Fig. 1** zeigt den Aufbau einer herkömmlichen Lufttrocknerpatrone 10 und Fig. 2 zeigt die in dieser Lufttrocknerpatrone 10 verwendete Schraubenfeder 9 in mehr Einzelheiten.

Die Lufttrocknerpatrone 10 weist typischerweise ein Patronengehäuse 5 mit einem geschlossenen Gehäusedeckel und einem Flansch 14 mit wenigstens einem Lufteinlass 15 und einem Luftauslass 16 auf. In dem Patronengehäuse 5 ist ein zumindest teilweise mit einem Trockenmittel(granulat) 4 gefüllter Trockenmittelbehälter angeordnet, der ein erstes Gehäuseteil 2 mit mehreren Luftströmungsöffnungen und ein als Granulatdeckel ausgestaltetes zweites Gehäuseteil 3 mit mehreren Luftströmungsöffnungen 34 aufweist. Der Flansch 14 ist mittels eines Bodenblechs 17 an dem Patronengehäuse 5 angebracht, wobei das Bodenblech 17 in der in Fig. 1 veranschaulichten Konfiguration über eine Bördelnaht mit dem Patronengehäuse 5 verbunden ist. Zur Montage der Lufttrocknerpatrone 10 auf einem Lufttrocknergehäuse ist der Flansch 14 an seinem den Luftauslass 16 aufweisenden Patronenhals mit einem Innengewinde versehen, über welches die Lufttrocknerpatrone 10 auf das Lufttrocknergehäuse aufgeschraubt werden kann.

Zwischen dem Flansch 14 und dem ersten Gehäuseteil 2 des Trockenmittelbehälters ist wenigstens ein Filterelement 7 angeordnet, das in der Ausführungsform von Fig. 1 in radialer Richtung des Trockenmittelbehälters von der über den Lufteinlass 15 in die Lufttrocknerpatrone 10 eintretenden Druckluft durchströmt wird. Nach der Filterung strömt die Druckluft durch den Zwischenraum zwischen dem Patronengehäuse 5 und dem ersten Gehäuseteil 2 des Trockenmittelbehälters nach oben und gelangt über die Luftströmungsöffnungen 34 im zweiten Gehäuseteil 3 ins Innere des Trockenmittelbehälters. Nach Durchströmen des Trockenmittels 4 tritt die entfeuchtete Druckluft über die Luftströmungsöffnungen im ersten Gehäuseteil 2 und den Luftauslass 16 aus der Lufttrocknerpatrone 10 aus.

Das zweite Gehäuseteil 3 ist als Trockenmittelabdeckung ausgestaltet, die in eine Behälteröffnung 6 des ersten Gehäuseteils 2 (in Oben-Unten-Richtung in Fig. 1) bewegbar eingesetzt ist. Das Trockenmittel(granulat) 4 wird unter einer definierten Vorspannung gehalten, damit im Trockenmittelbehälter über die Einsatzdauer der Lufttrocknerpatrone 10 ein definierter Luftdurchtrittsquerschnitt erhalten bleibt. Zwischen dem Patronengehäuse 5 und dem Trockenmittelbehälter ist eine Schraubenfeder 9 angeordnet, die sich einerseits am zweiten Gehäuseteil 3 des Trockenmittelbehälters und andererseits am gewölbten Gehäusedeckel des Patronengehäuses 5 abstützt.

Wie in Fig. 1 und 2 dargestellt, wird in herkömmlichen Lufttrocknerpatronen 10 üblicherweise eine im Wesentlichen zylindrische Schraubenfeder 9 mit mehreren Windungen gleichen Durchmessers verwendet. Um die Auflagefläche zwischen der Schraubenfeder 9 und dem Patronengehäuse 5 zu vergrößern, ist die Schraubenfeder 9 mit abgeschliffenen Enden 91 versehen, wie insbesondere in Fig. 2 erkennbar. Auf diese Weise soll ein Eindrücken einer scharfen Kante am Ende der Schraubenfeder 9 hinein in das Patronengehäuse 5 verhindert werden. Die abgeschliffenen Enden 91 der Schraubenfeder 9 sind üblicherweise mit einer Beschichtung zum Zwecke des Korrosionsschutzes versehen.

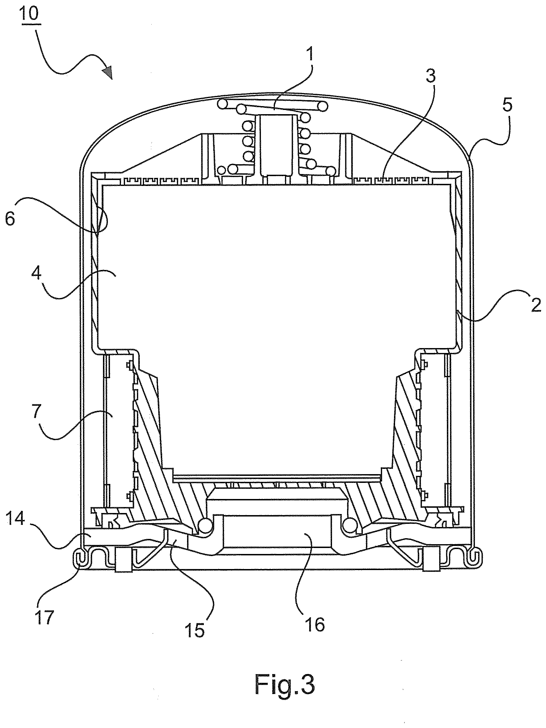

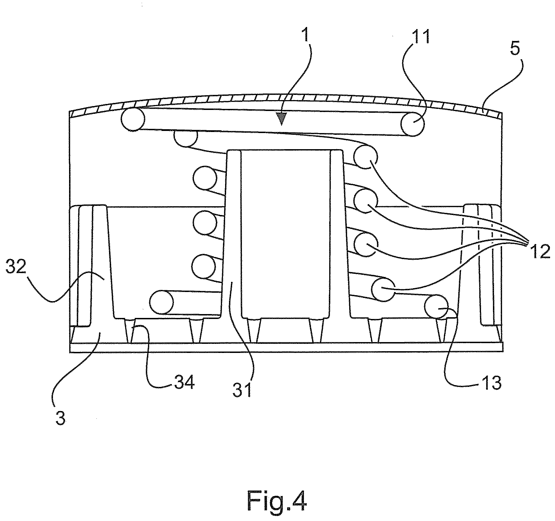

**Fig. 3** **und** **4** zeigen den Aufbau einer Lufttrocknerpatrone gemäß einem ersten Ausführungsbeispiel der Erfindung.

Die Lufttrocknerpatrone von Fig. 3 und 4 unterscheidet sich von der in Fig. 1 und 2 gezeigten herkömmlichen Lufttrocknerpatrone durch die Ausgestaltung der Schraubenfeder zum definierten Vorspannen des Trockenmittels im Trockenmittelbehälter. Im Übrigen entsprechen Aufbau und Funktionsweise der erfindungsgemäßen Lufttrocknerpatrone jenen der oben beschriebenen herkömmlichen Lufttrocknerpatrone.

Insbesondere weist die Lufttrocknerpatrone 10 dieses Ausführungsbeispiels ein Patronengehäuse 5 mit einem Flansch 14 und einem Bodenblech 17 sowie einen aus einem ersten Gehäuseteil 2 und einem zweiten Gehäuseteil 3 gebildeten Trockenmittelbehälter zum Aufnehmen eines Trockenmittel(granulat)s 4 auf. Das zweite Gehäuseteil 3 dient als Trockenmittelabdeckung und ist relativ zum ersten Gehäuseteil 2 bewegbar in der Behälteröffnung 6 des ersten Gehäuseteils 2 eingesetzt. Wie insbesondere in Fig. 4 erkennbar, ist das zweite Gehäuseteil 3 mit einer Vielzahl von Luftströmungsöffnungen 34 versehen, durch welche die Druckluft nach Durchströmen des Filterelements 7 ins Innere des Trockenmittelbehälters gelangen kann, um durch das darin enthaltene Trockenmittel 4 entfeuchtet zu werden.

An dem zweiten Gehäuseteil 3 sind zudem mehrere Führungselemente ausgebildet. Im vorliegenden Ausführungsbeispiel ist ein mittig angeordnetes, inneres Führungselement 31 vorgesehen, das beispielsweise als im Wesentlichen zylindrischer Dorn ausgestaltet ist. Außerdem ist im vorliegenden Ausführungsbeispiel ein ringförmiges äußeres Führungselement 32 vorgesehen, das im Wesentlichen koaxial zum inneren Führungselement 31 angeordnet ist. Diese Führungselemente 31, 32 dienen dem Positionieren der Schraubenfeder 1 beim Zusammenbau der Lufttrocknerpatrone 10 und dem Halten der Schraubenfeder 1 über die Einsatzdauer der Lufttrocknerpatrone 10 an ihrer korrekten Position. In anderen Ausführungsformen der Erfindung kann auch auf die Führungselemente verzichtet werden, nur das innere Führungselement 31 vorgesehen sein oder nur das äußere Führungselement 32 vorgesehen sein.

Das Patronengehäuse 5 und das erste Gehäuseteil 2 des Trockenmittelbehälters sind relativ zueinander unbeweglich angeordnet, während das zweite Gehäuseteil 3 des Trockenmittelbehälters relativ zum ersten Gehäuseteil 2 und auch relativ zum Patronengehäuse 5 bewegbar ist. So kann das Trockenmittel 4 im Trockenmittelbehälter mittels der Schraubenfeder 1 unter einer definierten Vorspannung gehalten werden, wobei die Schraubenfeder 1 zwischen dem zweiten Gehäuseteil 3 des Trockenmittelbehälters und dem nach außen gewölbten Gehäusedeckel des Patronengehäuses 5 abgestützt ist.

Im Gegensatz zu herkömmlichen Lufttrocknerpatronen besitzt die Schraubenfeder 1 der erfindungsgemäßen Lufttrocknerpatrone 10 keine rein zylindrische Gestalt. Wie insbesondere in Fig. 4 dargestellt, weist die Schraubenfeder 1 eine erste äußere Windung 11 an ihrem ersten (in Fig. 3 und 4 oberen) Ende und eine zweite äußere Windung 13 an ihrem zweiten (in Fig. 3 und 4 unteren) Ende auf. Dazwischen liegen mehrere innere Windungen 12.

Die äußeren Windungen 11, 13 der Schraubenfeder 1 weisen jeweils einen Durchmesser auf, der größer als der Durchmesser der inneren Windungen 12 ist. In Fig. 4 ist die Schraubenfeder 1 in ihrem verbauten gestauchten Zustand gezeigt. Aufgrund des Durchmesserunterschieds der Windungen ist es der zweiten äußeren Windung 13 während des Stauchens möglich, sich nach oben zu bewegen, ohne an ihre benachbarte innere Windung 12 anzustoßen. Ebenso ist es der ersten äußeren Windung 11 während des Stauchens möglich, sich etwas nach unten zu bewegen, ohne an ihre benachbarte innere Windung 12 anzustoßen. So kann sich die erste äußere Windung 11 großflächig an die konkave Innenkontur des Patronengehäuses 5 anlegen, ohne dabei die ihr benachbarte innere Windung 12 zu berühren.

Dabei haben die erste und die zweite äußere Windung 11, 13 von den diesen benachbarten inneren Windungen 12 bevorzugt nur einen geringen Abstand, sodass sich Schraubenfedern beim Fertigungsprozess nicht ineinander verhaken oder einfädeln können. Dieser Abstand liegt - je nach Drahtdurchmesser der Schraubenfeder - im unverbauten Zustand der Schraubenfeder 1 zum Beispiel im Bereich von etwa 0,5 mm bis etwa 1,5 mm. Allgemein beträgt dieser radiale Abstand zwischen den einander benachbarten Windungen zum Beispiel maximal etwa 50% des Drahtdurchmessers und mindestens etwa 15% des Drahtdurchmessers. Die Begrenzung des radialen Abstands zwischen den Windungen ist insbesondere im Bereich des Federendes der Schraubenfeder 1 gefordert und ist nicht über die gesamte äußere Windung 11, 13 hinweg erforderlich.

Für eine verbesserte Kräfteverteilung von der Schraubenfeder 1 auf das Patronengehäuse 5 ist es in diesem Zusammenhang von Vorteil, wenn die Schraubenfeder 1 zum Beispiel mit etwa 1,5 Windungen am Gehäusedeckel des Patronengehäuses 5 anliegt.

Durch die gute Kräfteverteilung der Schraubenfeder 1 auf das Patronengehäuse 5 kann das Patronengehäuse 5 im Vergleich zur herkömmlichen Konstruktion mit einer rein zylindrischen Schraubenfeder 9 mit einer geringeren Wandstärke ausgeführt werden. Dies führt zu Materialeinsparung und Gewichtsreduzierung.

Ferner ist die Geometrie der beiden äußeren Windungen 11, 13 und der inneren Windungen 12 im Wesentlichen symmetrisch. Das bedeutet, dass die in Fig. 4 dargestellte Schraubenfeder 1 auch in umgekehrter Orientierung, d.h. "auf dem Kopf stehend" verbaut werden kann, mit identischer Funktionalität.

Ferner hat die erfindungsgemäße Schraubenfeder 1 keine abgeschliffenen Enden. Somit entfällt der erhöhte Fertigungsaufwand, der für die Herstellung einer in Fig. 1 und 2 gezeigten Schraubenfeder 9 einer herkömmlichen Lufttrocknerpatrone 10 vonnöten wäre. So wird für die Schraubenfeder 9 der herkömmlichen Lufttrocknerpatrone 10 üblicherweise ein unbeschichteter Draht verwendet, der zur Schraubenfeder gewunden wird und dessen Federenden der äußeren Windungen angeschliffen werden, woraufhin der Draht der Schraubenfeder zwecks Korrosionsschutz beschichtet werden muss. Im Gegensatz dazu kann für die Schraubenfeder 1 der erfindungsgemäßen Lufttrocknerpatrone 10 direkt ein beschichteter Draht benutzt und gewunden werden, sodass die zusätzlichen Fertigungsschritte des Anschleifens und des Beschichtens entfallen.

Um die Führungsfunktion des inneren Führungselements 31 des zweiten Gehäuseteils 3 zu unterstützen, bildet zumindest ein Teil der inneren Windungen 12 einen im Wesentlichen zylindrischen Abschnitt. Neben der verbesserten Positionsführung für die Schraubenfeder 1 ergibt diese Ausgestaltung auch eine im Vergleich zu reinen Doppelkegelfedern reduzierte Knickneigung der Schraubenfeder 1. Das innere Führungselement 31 ragt im verbauten Zustand der Schraubenfeder 1 vorzugsweise über wenigstens eine volle innere Windung 12 des zylindrischen Abschnitts der Schraubenfeder 1 in diese hinein. In dem gezeigten Ausführungsbeispiel ragt das innere Führungselement 31 über mehr als die Hälfte der Höhe der Schraubenfeder 1 in diese hinein. Das innere Führungselement 31 verringert ebenfalls die Knickgefahr der Schraubenfeder 1.

Aufgrund des kleineren Durchmessers der inneren Windungen 12 kann im Vergleich zur herkömmlichen zylindrischen Schraubenfeder 9 von Fig. 1 und 2 eine Schraubenfeder 1 mit einer geringeren Drahtstärke verwendet werden, ohne dass deren Federkraft vermindert werden würde. Im Ergebnis können Material und Gewicht eingespart werden.

In einem erprobten Ausführungsbeispiel der Erfindung betrug die Höhe der Schraubenfeder 1 im unverbauten Zustand etwa 55 mm, betrug der Außendurchmesser der äußeren Windungen 11, 13 der Schraubenfeder maximal etwa 41 mm, betrug der Innendurchmesser der inneren Windungen 12 etwa 17 mm, und existierten etwa 2,5 zylindrische innere Windungen 12.

In einer anderen Ausführungsform der Erfindung (nicht dargestellt) hat die Schraubenfeder 1 nur eine erste äußere Windung 11 mit einem vergrößerten Durchmesser, während die zweite äußere Windung 13 im Wesentlichen den gleichen Durchmesser wie die inneren Windungen 12 besitzt.

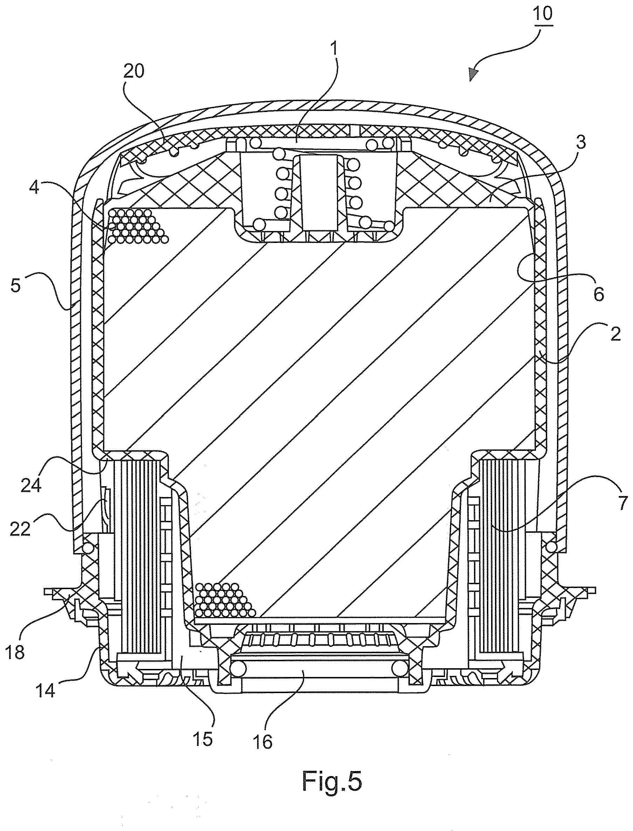

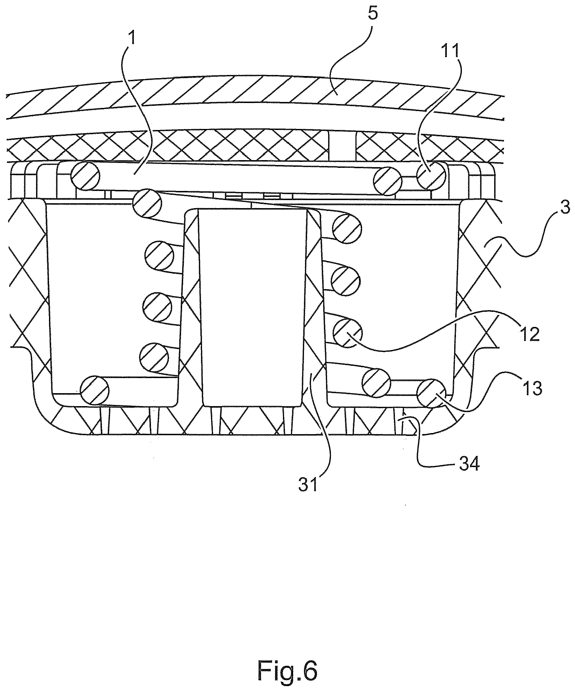

**Fig. 5** **und** **6** zeigen den Aufbau einer Lufttrocknerpatrone gemäß einem zweiten Ausführungsbeispiel der Erfindung.

Die Lufttrocknerpatrone 10 dieses zweiten Ausführungsbeispiels unterscheidet sich von jener des ersten Ausführungsbeispiels insbesondere durch die Ausgestaltung des Patronengehäuses und ihrer Montage af einem Lufttrocknergehäuse.

Insbesondere weist die Lufttrocknerpatrone 10 dieses Ausführungsbeispiels ein Patronengehäuse 5, das an einem Flansch 14 mit einem Bajonettvorsprung 18 lösbar befestigt, zum Beispiel aufgeschnappt ist, sowie einen aus einem ersten Gehäuseteil 2 und einem zweiten Gehäuseteil 3 gebildeten Trockenmittelbehälter zum Aufnehmen eines Trockenmittel(granulat)s 4 auf. Das zweite Gehäuseteil 3 dient als Trockenmittelabdeckung und ist relativ zum ersten Gehäuseteil 2 bewegbar in der Behälteröffnung 6 des ersten Gehäuseteils 2 eingesetzt. Wie insbesondere in Fig. 6 erkennbar, ist das zweite Gehäuseteil 3 mit einer Vielzahl von Luftströmungsöffnungen 34 versehen, durch welche die Druckluft nach Durchströmen des Filterelements 7 ins Innere des Trockenmittelbehälters gelangen kann, um durch das darin enthaltene Trockenmittel 4 entfeuchtet zu werden.

An dem zweiten Gehäuseteil 3 ist ein mittig angeordnetes, inneres Führungselement 31 vorgesehen, das beispielsweise als im Wesentlichen zylindrischer Dorn ausgestaltet ist. Dieses innere Führungselement 31 dient dem Positionieren der Schraubenfeder 1 beim Zusammenbau der Lufttrocknerpatrone 10 und dem Halten der Schraubenfeder 1 über die Einsatzdauer der Lufttrocknerpatrone 10 an ihrer korrekten Position. In anderen Ausführungsformen der Erfindung kann auch auf das Führungselement verzichtet werden.

Zwischen dem Deckelabschnitt des Patronengehäuses 5 und dem Trockenmittelbehälter ist ein zusätzlicher Deckel 20 angeordnet. Dieser Deckel 20 ist fest mit dem ersten Gehäuseteil 2 des Trockenmittelbehälters verbunden. Diese Verbindung ist bevorzugt als Schnappverbindung ausgestaltet, die erste Verbindungselemente 22 am Deckel 20 und zweite Verbindungselemente 24 am ersten Gehäuseteil 2 des Trocken umfasst. Zum Beispiel können die ersten Verbindungselemente 22 als Riemen ausgestaltet sein, die von dem Deckel 20 um den Trockenmittelbehälter herum geführt sind und in der Art eines Zugankers ein als Vorsprung am ersten Gehäuseteil 2 des Trockenmittelbehälters ausgestaltetes zweites Verbindungselement 24 hintergreifen.

Somit sind der Deckel 20 innerhalb des Patronengehäuses 5 und das erste Gehäuseteil 2 des Trockenmittelbehälters relativ zueinander unbeweglich angeordnet, während das zweite Gehäuseteil 3 des Trockenmittelbehälters relativ zum ersten Gehäuseteil 2 und auch relativ zum Deckel 20 bewegbar ist. So kann das Trockenmittel 4 im Trockenmittelbehälter mittels der Schraubenfeder 1 unter einer definierten Vorspannung gehalten werden, wobei die Schraubenfeder 1 zwischen dem zweiten Gehäuseteil 3 des Trockenmittelbehälters und dem nach außen gewölbten Deckel 20 abgestützt ist.

Diese Bauart der Lufttrocknerpatrone 10 ist - mit Ausnahme insbesondere der erfindungsgemäß ausgestalteten Schraubenfeder 1 - grundsätzlich zum Beispiel aus der EP 2 448 801 B1 bekannt, auf welche bezüglich Aufbau und Funktionsweise hiermit vollinhaltlich Bezug genommen wird.

Die Schraubenfeder 1 der Lufttrocknerpatrone 10 dieses Ausführungsbeispiels ist analog zu jener des ersten Ausführungsbeispiels von Fig. 3 und 4 ausgebildet.

Durch die gute Kräfteverteilung der Schraubenfeder 1 auf den Deckel 20 kann dieser Deckel 20 im Vergleich zur herkömmlichen Konstruktion mit einer rein zylindrischen Schraubenfeder 9 mit einer geringeren Wandstärke ausgeführt werden. Dies führt zu Materialeinsparung und Gewichtsreduzierung.

### BEZUGSZEICHENLISTE

- 1: Schraubenfeder (gemäß der Erfindung)
- 2: erstes Gehäuseteil des Trockenmittelbehälters
- 3: zweites Gehäuseteil des Trockenmittelbehälters, insbesondere Trockenmittelabdeckung bzw. Granulatdeckel
- 4: Trockenmittel, insbesondere Trockenmittelgranulat
- 5: Patronengehäuse
- 6: Behälteröffnung
- 7: Filterelement
- 9: Schraubenfeder (gemäß Stand der Technik)
- 10: Lufttrocknerpatrone
- 11: erste äußere Windung
- 12: innere Windungen
- 13: zweite äußere Windung
- 14: Flansch
- 15: Einlassöffnung
- 16: Auslassöffnung
- 17: Bodenblech
- 18: Bajonettvorsprung
- 20: Deckel
- 22: erstes Verbindungselement an 20
- 24: zweites Verbindungselement an 2
- 31: inneres Führungselement, insbesondere Dorn
- 32: äußeres Führungselement
- 34: Luftströmungsöffnungen
- 91: abgeschliffene Enden von 9

## Patentansprüche

1. Lufttrocknerpatrone (10), insbesondere für eine Druckluftaufbereitungsanlage eines Nutzfahrzeugs, aufweisend
einen Trockenmittelbehälter zum Bevorraten eines Trockenmittels (4) mit einem ersten Gehäuseteil (2) und einem zweiten Gehäuseteil (3), die relativ zueinander bewegbar sind;
ein Patronengehäuse (5) zum Aufnehmen des Trockenmittelbehälters; und eine Schraubenfeder (1), die das zweite Gehäuseteil (3) in eine Richtung zum Reduzieren eines Volumens des Trockenmittelbehälters vorspannt und die mehrere Windungen (11, 12, 13) aufweist,
wobei
eine erste äußere Windung (11) an einem ersten Ende der Schraubenfeder (1) einen größeren Durchmesser aufweist als zwischen dem ersten und einem zweiten Ende der Schraubenfeder liegende innere Windungen (12) der Schraubenfeder (1) wobei
im unverbauten Zustand der Schraubenfeder (1) ein Innendurchmesser der ersten äußeren Windung (11) an deren äußerem Ende um weniger als eine Drahtdurchmessergröße der Schraubenfeder (1) größer ist als ein Außendurchmesser der der ersten äußeren Windung (11) benachbarten inneren Windung (12)
**dadurch gekennzeichnet, dass**
sich die Schraubenfeder (1) über wenigstens 1,2 Windungen, bevorzugt wenigstens 1,4 Windungen an ihrer dem zweiten Gehäuseteil (3) des Trockenmittelbehälters abgewandten Seite abstützt.

2. Lufttrocknerpatrone gemäß Anspruch 1, wobei
eine zweite äußere Windung (13) an dem zweiten Ende der Schraubenfeder (1) einen größeren Durchmesser aufweist als zwischen dem ersten und dem zweiten Ende der Schraubenfeder liegende innere Windungen (12) der Schraubenfeder (1).

3. Lufttrocknerpatrone gemäß Anspruch 2, wobei
ein Innendurchmesser der zweiten äußeren Windung (13) an deren äußerem Ende um weniger als eine Drahtdurchmessergröße der Schraubenfeder (1) größer ist als ein Außendurchmesser der der zweiten äußeren Windung (13) benachbarten inneren Windung (12).

4. Lufttrocknerpatrone (10) gemäß Anspruch 2, wobei
die erste äußere Windung (11) und die zweite äußere Windung (13) der Schraubenfeder (1) eine zueinander identische Geometrie aufweisen.

5. Lufttrocknerpatrone (10) gemäß einem der vorhergehenden Ansprüche, wobei
sich die Schraubenfeder (1) gegen eine in eine Richtung weg von dem Trockenmittelbehälter gewölbte Fläche abstützt.

6. Lufttrocknerpatrone (10) gemäß einem der vorhergehenden Ansprüche, wobei
die erste äußere Windung (11) der Schraubenfeder (1) im verbauten Zustand der Schraubenfeder (1) von einer ihr benachbarten inneren Windung (12) der Schraubenfeder (1) beabstandet ist und/oder die zweite äußere Windung (13) der Schraubenfeder (1) im verbauten Zustand der Schraubenfeder (1) von einer ihr benachbarten inneren Windung (12) der Schraubenfeder (1) beabstandet ist.

7. Lufttrocknerpatrone (10) gemäß einem der vorhergehenden Ansprüche, wobei
wenigstens ein Teil der inneren Windungen (12) der Schraubenfeder (1) einen zylindrischen Abschnitt der Schraubenfeder (1) bildet.

8. Lufttrocknerpatrone (10) gemäß einem der vorhergehenden Ansprüche, wobei
am zweiten Gehäuseteil (3) des Trockenmittelbehälters wenigstens ein Führungselement (31, 32) zum Positionieren der Schraubenfeder (1) vorgesehen ist.

9. Lufttrocknerpatrone (10) gemäß Anspruch 8, wobei
das wenigstens eine Führungselement (31, 32) ein inneres Führungselement (31) aufweist, das im verbauten Zustand der Schraubenfeder (1) bis in wenigstens eine innere Windung (12) der Schraubenfeder (1) in die Schraubenfeder (1) hinein ragt.

10. Lufttrocknerpatrone (10) gemäß einem der vorhergehenden Ansprüche, wobei
ein Draht der Schraubenfeder (1) über seine gesamte Länge einen im Wesentlichen kreisförmigen Querschnitt aufweist.

11. Lufttrocknerpatrone (10) gemäß einem der Ansprüche 1 bis 10, wobei
sich die Schraubenfeder (1) einerseits an dem zweiten Gehäuseteil (3) des Trockenmittelbehälters und andererseits an dem Patronengehäuse (5) abstützt.

12. Lufttrocknerpatrone (10) gemäß einem der Ansprüche 1 bis 10, wobei
zwischen dem Trockenmittelbehälter und dem Patronengehäuse (5) ein Deckel (20) angeordnet ist, der relativ zum ersten Gehäuseteil (2) des Trockenmittelbehälters unbeweglich befestigt ist; und
sich die Schraubenfeder (1) einerseits an dem zweiten Gehäuseteil (3) des Trockenmittelbehälters und andererseits an dem Deckel (20) abstützt.

13. Schraubenfeder (1) für eine Lufttrocknerpatrone (10) gemäß einem der vorhergehenden Ansprüche, die mehrere Windungen (11, 12, 13) aufweist,
wobei
eine erste äußere Windung (11) an einem ersten Ende der Schraubenfeder (1) und/oder eine zweite äußere Windung (13) an einem zweiten Ende der Schraubenfeder (1) jeweils einen größeren Durchmesser aufweisen als wenigstens eine zwischen dem ersten und dem zweiten Ende der Schraubenfeder liegende innere Windung (12) der Schraubenfeder (1) wobei,
im unverbauten Zustand der Schraubenfeder (1) ein Innendurchmesser der ersten äußeren Windung (11) an deren äußerem Ende um weniger als eine Drahtdurchmessergröße der Schraubenfeder (1) größer ist als ein Außendurchmesser der der ersten äußeren Windung (11) benachbarten inneren Windung (12) und/oder ein Innendurchmesser der zweiten äußeren Windung (13) an deren äußerem Ende um weniger als eine Drahtdurchmessergröße der Schraubenfeder (1) größer ist als ein Außendurchmesser der der zweiten äußeren Windung (13) benachbarten inneren Windung (12)
**dadurch gekennzeichnet, dass**
sich die Schraubenfeder (1) über wenigstens 1,2 Windungen, bevorzugt wenigstens 1,4 Windungen an ihrer dem zweiten Gehäuseteil (3) des Trockenmittelbehälters abgewandten Seite abstützt.

## Claims

1. Air-dryer cartridge (10), in particular for a compressed-air preparation unit of a utility vehicle, comprising
a desiccant container for storing a desiccant (4), having a first housing portion (2) and a second housing portion (3) which can move relative to one another;
a cartridge housing (5) for accommodating the desiccant container; and
a coil spring (1) which prestresses the second housing portion (3) in a direction tending to reduce the volume of the desiccant container and which has a plurality of turns (11, 12, 13),
wherein
a first outer turn (11) at a first end of the coil spring (1) has a larger diameter than the inner turns (12) of the coil spring between the said first end and a second end of the coil spring (1), so that
in the uninstalled condition of the coil spring (1) an inside diameter of the first outer turn (11) at its outer end is larger by less than the diameter of the wire of the coil spring (1), than an outer diameter of the inner turn (12) adjacent to the said first outer turn (11),
**characterised in that**
the coil spring (1) is supported on its side remote from the second housing portion (3) of the desiccant container by at least 1.2 turns and preferably by at least 1.4 turns.

2. Air-dryer cartridge according to Claim 1,wherein
a second outer turn (13) at the second end of the coil spring (1) has a larger diameter than the inner turns (12) of the coil spring between the first and a second end of the coil spring (1).

3. Air-dryer cartridge according to Claim 2, wherein
an inside diameter of the second outer turn (13) at its outer end is larger by less than the diameter of the wire of the coil spring (1), than an outer diameter of the inner turn (12) adjacent to the said second outer turn (13).

4. Air-dryer cartridge (10) according to Claim 2, wherein
the geometries of the first outer turn (11) and the second outer turn (13) of the coil spring (1) are identical to one another.

5. Air-dryer cartridge (10) according to any of the preceding claims, wherein
the coil spring (1) is supported against a surface that is curved in the direction facing away from the desiccant container.

6. Air-dryer cartridge (10) according to any of the preceding claims, wherein
in the installed condition of the coil spring (1), the first outer turn (11) of the coil spring (1) is a distance away from an inner turn (12) of the coil spring (1) adjacent thereto and/or in the installed condition of the coil spring (1), the second outer turn (13) of the coil spring (1) is a distance away from an inner turn (12) of the coil spring (1) adjacent thereto.

7. Air-dryer cartridge (10) according to any of the preceding claims, wherein
at least some of the inner turns (12) of the coil spring (1) form a cylindrical section of the coil spring (1).

8. Air-dryer cartridge (10) according to any of the preceding claims, wherein
at least one guiding element (31, 32) for positioning the coil spring (1) is provided on the second housing portion (3) of the desiccant container.

9. Air-dryer cartridge (10) according to Claim 8, wherein
the said at least one guiding element (31, 32) comprises an internal guiding element (31) which, in the installed condition of the coil spring (1), extends into the coil spring (1) at least as far as an inner turn (12) of the coil spring (1).

10. Air-dryer cartridge (1) according to any of the preceding claims, wherein
a wire of which the coil spring (1) is made, has an essentially circular cross-section over its entire length.

11. Air-dryer cartridge (10) according to any of Claims 1 to 10, wherein
the coil spring (1) rests on one side against the second housing portion (3) of the desiccant container and on the other side against the cartridge housing (5).

12. Air-dryer cartridge (10) according to any of Claims 1 to 10, wherein
between the desiccant container and the cartridge housing (5) there is arranged a cover (20), which is fixed and cannot move relative to the first housing portion (2) of the desiccant container; and
the coil spring (1) rests on one side against the second housing portion (3) of the desiccant container and on the other side against the said cover (20).

13. Coil spring (1) for an air-dryer cartridge (10) according to any of the preceding claims, which spring comprises a plurality of turns (11, 12, 13), wherein
a first outer turn (11) at a first end of the coil spring (1) and/or a second outer turn (13) at a second end of the coil spring (1) has/have a larger diameter than at least one inner turn (12) of the coil spring (1) between the said first and second ends of the coil spring,
wherein in the uninstalled condition of the coil spring (1) an inside diameter of the first outer turn (11) at its outer end is larger by less than the diameter of the wire of the coil spring (1) than an outer diameter of the inner turn (12) adjacent to the said first outer turn (11) and/or an inside diameter of the second outer turn (13) at its outer end is larger by less than the diameter of the wire of the coil spring (1) than an outer diameter of the inner turn (12) adjacent to the said second outer turn (13),
**characterised in that**
the coil spring (1) is supported on its side remote from the second housing portion (3) of the desiccant container by at least 1.2 turns and preferably at least 1.4 turns.

## Revendications

1. Cartouche (10) de déshumidificateur d'air, notamment pour une installation de préparation d'air comprimé d'un véhicule utilitaire, comportant
un récipient d'agent dessiccateur pour mettre en réserve un agent (4) dessiccateur, comprenant une première partie (2) de boîtier et une deuxième partie (3) de boîtier, qui sont mobiles l'une par rapport à l'autre ;
un boîtier (5) de cartouche pour la réception du récipient d'agent dessiccateur ; et
un ressort (1) hélicoïdal, qui précontraint la deuxième partie (3) de boîtier dans une direction de réduction d'un volume du récipient de l'agent dessiccateur et qui a plusieurs spires (11, 12, 13),
dans laquelle
une première spire (11) extérieure à une première extrémité du ressort (1) hélicoïdal a un diamètre plus grand que des spires (12) intérieures du ressort (1) hélicoïdal se trouvant entre la première et une deuxième extrémité du ressort hélicoïdal, dans laquelle
à l'état non posé du ressort (1) hélicoïdal, un diamètre intérieur de la première spire (11) extérieure à son extrémité extérieure est plus grande, de moins qu'une dimension de diamètre de fil du ressort (1) hélicoïdal, qu'un diamètre extérieur de la spire (12) intérieure voisine de la première spire (11) extérieure,
**caractérisée en ce que**
le ressort (1) hélicoïdal s'appuie, par au moins 1,2 spire, de préférence au moins 1,4 spire, sur son côté, loin de la deuxième partie (3) de boîtier du récipient d'agent dessiccateur.

2. Cartouche de déshumidificateur d'air suivant la revendication 1, dans laquelle
une deuxième spire (13) extérieure à la deuxième extrémité du ressort (1) hélicoïdal a un diamètre plus grand que des spires (12) intérieures du ressort (1) hélicoïdal se trouvant entre la première et la deuxième extrémités du ressort hélicoïdal.

3. Cartouche de déshumidificateur d'air suivant la revendication 2, dans laquelle
un diamètre intérieur de la deuxième spire (13) extérieure à son extrémité extérieure est plus grand, de moins qu'une grandeur de diamètre de fil du ressort (1) hélicoïdal, qu'un diamètre extérieur de la spire (12) intérieure voisine de la deuxième spire (13) extérieure.

4. Cartouche (10) de déshumidificateur d'air suivant la revendication 2, dans laquelle
la première spire (11) extérieure et la deuxième spire (13) extérieure du ressort (1) hélicoïdal ont une même géométrie.

5. Cartouche (10) de déshumidificateur d'air suivant l'une des revendications précédentes, dans laquelle
le ressort (1) hélicoïdal s'appuie sur une surface cintrée dans une direction s'éloignant du récipient d'agent dessiccateur.

6. Cartouche (10) de déshumidificateur d'air suivant l'une des revendications précédentes, dans laquelle
la première spire (11) extérieure du ressort (1) hélicoïdal est, dans l'état posé du ressort (1) hélicoïdal, à distance d'une spire (12) intérieure, qui en est voisine, du ressort (1) hélicoïdal et/ou la deuxième spire (13) extérieure du ressort (1) hélicoïdal est, à l'état posé du ressort (1) hélicoïdal, à distance d'une spire (12) intérieure, qui en est voisine, du ressort (1) hélicoïdal.

7. Cartouche (10) de déshumidificateur d'air suivant l'une des revendications précédentes, dans laquelle
au moins une partie des spires (12) intérieures du ressort (1) hélicoïdal forme une partie cylindrique du ressort (1) hélicoïdal.

8. Cartouche (10) de déshumidificateur d'air suivant l'une des revendications précédentes, dans laquelle
sur la deuxième partie (3) de boîtier du récipient d'agent dessiccateur est prévu au moins un élément (31, 32) de guidage pour la mise en position du ressort (1) hélicoïdal.

9. Cartouche (10) de déshumidificateur d'air suivant la revendication 8, dans laquelle
le au moins un élément (31, 32) de guidage a un élément (31) intérieur de guidage, qui, dans l'état posé du ressort (1) hélicoïdal, pénètre dans le ressort (1) hélicoïdal jusqu'à au moins une spire (12) intérieure du ressort (1) hélicoïdal.

10. Cartouche (10) de déshumidificateur d'air suivant l'une des revendications précédentes, dans laquelle
un fil du ressort (1) hélicoïdal a, sur toute sa longueur, une section transversale sensiblement circulaire.

11. Cartouche (10) de déshumidificateur d'air suivant l'une des revendications 1 à 10, dans laquelle
le ressort (1) hélicoïdal s'appuie d'une part sur la deuxième partie (3) de boîtier du récipient d'agent dessiccateur, et d'autre part sur le boîtier (5) de la cartouche.

12. Cartouche (10) de déshumidificateur d'air suivant l'une des revendications 1 à 10, dans laquelle
entre le récipient d'agent dessiccateur et le boîtier (5) de la cartouche, est disposé un couvercle (20), qui est fixé de manière inamovible par rapport à la première partie (2) de boîtier du récipient d'agent dessiccateur ; et
le ressort (1) hélicoïdal s'appuie d'une part sur la deuxième, partie (3) de boîtier du récipient d'agent dessiccateur, et d'autre part sur le couvercle (20).

13. Ressort (1) hélicoïdal pour une cartouche (10) de déshumidificateur d'air suivant l'une des revendications précédentes, qui a plusieurs pires (11, 12, 13),
dans lequel
une première spire (11) extérieure à une première extrémité du ressort (1) hélicoïdal et/ou une deuxième spire (13) extérieure à une deuxième extrémité du ressort (1) hélicoïdal ont chacune un diamètre plus grand qu'au moins une spire (12) intérieure du ressort (1) hélicoïdal se trouvant entre la première et la deuxième extrémités du ressort hélicoïdal, dans lequel,
à l'état non posé du ressort (1) hélicoïdal, un diamètre intérieur de la première spire (11) extérieure à son extrémité extérieure est plus grand, de moins qu'une grandeur de diamètre de fil du ressort (1) hélicoïdal, qu'un diamètre extérieur de la spire (12) intérieure voisine de la première spire '(11) extérieure et/ou un diamètre intérieur de la deuxième spire (13) extérieure à son extrémité extérieure est plus grand, d'au moins une grandeur de diamètre de fil du ressort (1) hélicoïdal, qu'un diamètre extérieur de la spire (12) intérieure voisine de la deuxième spire (13) extérieure,
**caractérisé en ce que**
le ressort (1) hélicoïdal s'appuie, par au moins 1,2 spire, de préférence au moins 1,4 spire, sur son côté, loin de la deuxième partie (3) de boîtier du récipient d'agent dessiccateur.
